# EUROPEAN PATENT SPECIFICATION

(11) **EP 3 274 081 B1**
(45) Date of publication and mention of the grant of the patent: **29.12.2021**
(21) Application number: 16709011.7
(22) Date of filing: 07.03.2016
(51) Int. Cl.: B01J 8/02, F28F 9/02, F28F 9/18, F28D 9/00

(54) **PLATE EXCHANGER FOR CHEMICAL REACTORS WITH AUTOMATICALLY WELDABLE COLLECTORS**
PLATTENTAUSCHER FÜR CHEMISCHE REAKTOREN MIT AUTOMATISCH SCHWEISSBAREN KOLLEKTOREN
ÉCHANGEUR À PLAQUES POUR DES RÉACTEURS CHIMIQUES AVEC DES COLLECTEURS SOUDABLES AUTOMATIQUEMENT

(30) Priority: 26.03.2015 EP 15161209
(43) Date of publication of application: 31.01.2018
(73) Proprietor: Casale SA, 6900 Lugano-Besso (CH)
(72) Inventor: RIZZI, Enrico, 22070 Casnate con Bernate (CO) (IT)
(74) Representative: M. Zardi & Co S.A.
(86) International application number: PCT/EP2016/054791
(87) International publication number: WO 2016/150688

(56) References cited:
- EP-A1- 2 090 355
- EP-A1- 2 283 919
- WO-A2-2012/059889
- GB-A- 2 130 498
- US-A1- 2011 059 523

## Description

### Field of application

The invention relates to heat exchangers for interiors of chemical reactors. In greater detail, the invention relates to the realization of plate-type heat exchange elements for said exchangers.

### Prior art

Chemical reactors containing a heat exchanger immersed in a catalytic bed are known. Said heat exchanger allows control of the temperature of the catalytic bed and of the gaseous flow of reagents and products passing through the bed, keeping the temperature within a predefined range. For this reason such reactors are also termed isothermal reactors. Isothermal chemical reactors are used, for example, for the synthesis of methanol and for the synthesis of ammonia.

In particular, isothermal reactors are known wherein the heat exchanger comprises heat exchange elements formed by plates passed through internally by a cooling or heating medium. Said plates may be parallel to each other or, more often, they are arranged radially around the axis of the reactor. A reactor comprising a heat exchanger according to such embodiments is also called, in short, plate isothermal reactor. Such a reactor is for example described in EP 1 153 653.

Each plate is formed essentially by two flat and parallel sheets which are spaced apart and welded along the perimeter, so as to define one or more channels for a heat exchange fluid. A known constructional design also provides welding together the plates at selected points of the surface so as to define channels and/or control the circulation of the fluid inside.

Plate-type chemical reactors have proved to be superior to conventional tube reactors; however, the construction of the plates is costly and poses a number of technical problems which have not been completely solved yet. The greatest technological challenges arise in connection with the pressure resistance, the construction of the necessary feeding collectors, and the need to reduce the dimensions.

The problem of the pressure resistance is particularly present in reactors where the fluid circulating inside the plates is different and/or has different physical conditions (especially pressure) compared to the fluid passing over the plates externally. Plates which must be designed to withstand significant pressure differences between inside and outside, for example a difference of 10 bars or more, are termed "high pressure plates". Plates which are subject to smaller pressure differences of a few bars are instead termed "low pressure plates". In low pressure plates, the fluid circulating inside the plate is generally the same fluid (normally gas) circulating externally.

An example of low pressure plates can be found in reactors where the hot gases exchange heat with the fresh mixture, resulting in cooling of the gases and pre-heating of the mixture; in this case the streams, which are both gaseous, have substantially the same pressure, head losses aside. High pressure plates are required for example in methanol reactors, where the outside of the plates is in contact with synthesis gas at a high pressure, generally around 100 bar, while water evaporating at a substantially lower pressure, for example about 30 bar, circulates inside the plates. One of the two circuits may be depressurized during transient conditions or in the case of malfunctioning. For example, one of the two circuits may be at the working pressure, while the other circuit is at ambient pressure. The plates consequently may be subject only to the internal pressure (e.g. 30 bars) or only to the external pressure (for example between 70 and 100 bar). The above results in a considerable stress the plate must be able to withstand.

The construction of the collectors for feeding and receiving the heat exchange fluid to/from each plate constitutes another technological problem. Each plate requires a first collector (distributor) for feeding the fluid and a second collector for receiving the fluid after passing through the plate itself. Said two collectors are usually welded to two opposite sides of the plate.

It must be considered that the plates have a substantially elongated rectangular shape with the greatest side in the direction of the reactor axis. For example, in vertical reactors with radially arranged plates, which represent the most common applications, the plates have two vertical (axial) long sides and two radial shorter sides. The heat exchange fluid may circulate axially or radially inside the plates, depending on the specific design. In axial-flow plates the collectors are welded to the shorter sides, while in radial-flow plates the collectors are welded to the longer sides.

The high pressure plates defined above are generally supplied with an axial flow and consequently the collectors are arranged on the shorter sides. On the other hand, the low pressure plates are more often supplied radially and therefore have the collectors arranged along the longer sides.

In conventional technology, in the case of high pressure plates, said two collectors are formed, for reasons of mechanical resistance, by pipes with a circular cross-section welded along the sides of the plates using the manual TIG welding method. This method, however, is slow and costly and requires skilled workers in order to avoid defective welds which could result in leakages during operation. In fact welding must be performed along a directrix of the pipe on a curved surface, with good penetration, but without obstructing the passages inside the plate. Moreover, welds of this type cause considerable distortions owing to the high heat level. The radial plates, with collectors welded to the longer sides, require welds of considerable length, resulting in very costly work.

Any welding defects may give rise to problems of leak-tightness between the plate-side and the shell-side of the reactor, which must be absolutely avoided since they would result in stoppage of the reactor for repairing the leak or excluding the exchanger part concerned.

Consequently there is an incentive to use automated welding methods (e.g. laser) which have the advantage of reducing the labour costs and ensuring a uniform quality. Said methods, however, are applicable substantially only to planar and parallel surfaces and therefore cannot be effectively used with conventional cylindrical-pipe collectors.

EP 2 283 919 describes an exchanger for isothermal reactors having plates provided with automatically weldable collectors, in which the collectors are applied on one face of the plate and are suitably shaped with edge portions parallel to said face, for example omega-shaped, allowing automatic welding.

This solution allows automatic welding, but results in an asymmetrical arrangement of the collectors. For this reason, it is suitable mainly for low pressure plates. If the plate is subject to high pressure differences, the asymmetrical arrangement of the collectors, may cause distortions and stresses. Moreover, feeding and receiving of the fluid do not precisely occur along the edge of the plate and pockets may form, which are undesirable especially if the internal fluid is water or steam.

The question of the dimensions is particularly problematic in the case of exchangers having plates arranged radially because the plates converge in the vicinity of the axis and there is little available space between one plate and the other; it is therefore desirable to reduce the dimensions of the collectors as far as possible. Furthermore, more generally, the space available inside the chemical reactors is limited.

In order to solve the problem of the dimensions, collectors with a variable diameter have been proposed, which are however more costly to manufacture.

A further problem to be solved consists in the distribution of the fluid and the need for suitable flow cross-sections (apertures). Entry into the plate and exit from the plate occur via a pipe connected to the collector. The function of the collector is to distribute or collect the fluid along the entire width in the case of axial plates or along the entire length in the case of radial plates. This requires a suitable flow cross-section comparable with the cross-section of the pipe feeding the plate. A large flow cross-section, however, may weaken the plate.

The object of the invention is to further improve the techniques for the construction of plate exchangers for interiors of chemical reactors, and in particular of the respective collectors for feeding and/or receiving the fluid, in order to meet these requirements and overcome these problems.

WO 2012/059889 discloses a tube for a heat exchanger comprising a plate provided with a plurality of parallel flow ports.

### Summary of the invention

The objects of the invention are achieved with a plate heat exchanger for internals of isothermal chemical reactors, said plate heat exchanger comprising a plurality of heat exchange elements in the form of plates, each plate having an essentially rectangular shape, wherein each plate comprises two walls which are joined together along the perimeter of at least one of said walls and spaced apart, so as to form an internal passage for a heat exchange medium, and wherein each plate comprises a respective first collector for feeding said medium to said passage of the plate, and a respective second collector for receiving the medium from said passage, said first collector and second collector being fixed to opposite sides of said plate, **characterized in that:**
at least one of said first collector and second collector of each plate extend along said side(s) of said plate and comprises edge surfaces which are planar and parallel to respective planar end portions of said walls of said plate, in such a way that said edge surfaces of said at least one collector and said end portions of said walls of said plate form parallel and plane matching surfaces , which are welded together.

The plates are preferably pressed or made with a sandwich design. These execution techniques allow obtain planar end portions as desired. Said internal passage may include one or more channels according to different embodiments.

Said parallel and plane matching surfaces belong to the collector and to the heat exchange plate, respectively, and are suitable for execution of automated welding.

Said at least one collector can be a feeding collector or a receiving collector. Preferably both the feeding and receiving collector comprise the above defined edge surfaces. Accordingly, both collectors cane we fixed by automated welding.

In some embodiments, said at least one collector clamps in between two walls of the heat exchange plate.

In a preferred embodiment, said collector is shaped as a clamp, more preferably having a C-shaped cross-section. A C-shaped collector comprises, in a preferred embodiment, two flanges which parallel overlap with the end portions of the plate walls, thus creating two zones for joining together collector and plate which can be automatically welded, for example by a laser welding.

Said at least one collector is connected to a feeding pipe or to a receiving pipe. Another aspect of the invention consists of a collector with a cross-section decreasing from said feeding pipe or receiving pipe. The cross-section decreases according to a direction away from said pipe, towards the opposite end of the plate. In order to keep the plate as narrow as possible, the increase in the cross-section of the collector is advantageously obtained with an increase in the height.

Preferably, the collector with decreasing cross-section has a triangular or trapezoidal shape. Said constructional form provides a cross-section suitable for the flowrate at any point of the collector; in fact the entire flow passes in the vicinity of the pipe, while at the opposite end the flow tends towards zero.

According to further embodiments of the invention, said at least one collector has a sandwich-like structure comprising two walls parallel to the walls of the heat exchange plate.

In a preferred embodiment, one of the walls of the collector is formed by a portion of a wall of the plate, which extends beyond a peripheral edge of said plate. In some embodiments the other wall of the collector is applied as a cover. In some embodiments, spacing or reinforcing inserts are provided between the two walls of the plate, for example in the form of strips or discs.

The preferred material for the walls of the plate and the collectors is metal, more preferably steel. Typically the walls consist of steel sheets with a thickness of about 1-3 mm.

A first advantage of the invention is given by the arrangement of the collectors which reduces the overall volume and allows automatic welding with the benefits of lower cost, repeatability and uniform quality. The invention is also suitable for producing high pressure collectors and plates, i.e. which are able to withstand a significant difference in pressure between outside and inside, for example of 10 bar or more. Automated welding is made possible by the pair of parallel and plane matching surfaces belonging to the collector and to the heat exchange plate, respectively.

The sandwich design of collectors is another innovative aspect of the present invention and allows the realization of collectors which are weldable automatically on one side only and which have a structure suitable for high pressures.

These and other advantages will emerge more clearly with the aid of the detailed description.

### Brief description of the figures

Fig. 1 is a schematic cross-section through an isothermal chemical reactor containing a heat exchanger.
Fig. 2 is a view of a portion of a heat exchange plate and associated collector, according to an embodiment of the invention.
Fig. 3 is a cross-sectional view of the plate and collector according to Fig. 2.
Fig. 4 shows a plate with sandwich design according to another embodiment.
Fig. 5 shows a front view of a collector and part of the plate according to Fig. 4, with internal reinforcing strips.
Fig. 6 shows a variation of the embodiment of Fig. 5, with reinforcing discs instead of the strips.
Figs. 7 and 8 are cross-sectional views of two further embodiments of plates with a sandwich design.

### Detailed description

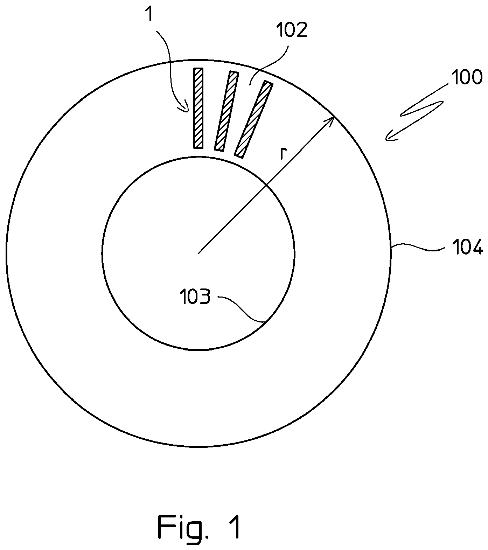

Fig. 1 shows a schematic cross-section of a heat exchanger 100 for a chemical reactor. The exchanger 100 is immersed in a catalytic bed 102 and comprises heat exchange plates 1 which in the example are arranged radially in the direction r around a central axis. The exchanger has an annular structure.

Fig. 1 relates to a radial-flow or axial-radial flow reactor in which the catalytic bed and the exchanger are bounded by two cylindrical walls 103 and 104. In an axial-flow reactor the outer wall is the vessel of the reactor, while the inner wall is a central tube generally having the function of a manhole.

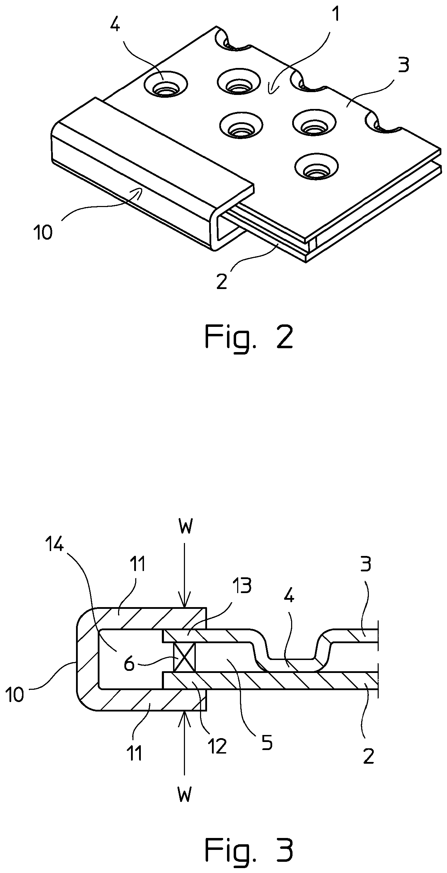

Figs. 2 and 3 show a first embodiment of the invention in which a heat exchange plate 1 is formed essentially by a first wall 2 and by a second wall 3; the second wall 3 is welded to the wall 2 along the perimeter and at separate points corresponding to welding "spots" 4 using a construction method which is known per se.

The walls 2, 3 are formed by metal sheets, preferably of austenitic steel or duplex steel.

The inside 5 of the plate 1 is passed through by a heat exchange fluid, such as water, steam, water/steam mixtures or a gas, supplied and received by collectors welded to two sides of the plate itself. Figs. 2 and 3 show a collector 10.

The plate 1 may also comprise a series of spacers 6 between the walls 2 and 3 and arranged in the region of the collector 10.

The collector 10, in the embodiment of Figs. 2-3, has a substantially C-shaped cross-section which clamps the peripheral edges of the plate 1. More in detail the C-shaped collector 10 has two walls 11 extending parallel to end portions 12, 13 of the walls (metal sheets) 2 and 3.

Accordingly, parallel and plane surfaces for automated welding are available, i.e. the end portions 12 and 13 of the metal sheets 2 and 3, and the tips of the walls 11 of the collector 10.

The welds, which are indicated by the arrows W in Fig. 3, are provided between said planar surfaces of the walls 11 and the end portions 12, 13 and, thanks to the parallel and plane surfaces, can be performed automatically, for example using laser technology.

The collector 10, referring for example to a feeding collector, operates as follows. The fluid is supplied into the chamber 14 defined between the collector 10 and the plate 1 and flows through the inside 5 of the plate 1, if necessary passing through apertures between the spacers 6. On the other hand, when the collector 10 is a receiving collector, the fluid passes from the inside 5 of the plate to the chamber 14.

The collectors have a cross-section which is generally greater than passing-through cross section of the plate body. In order to ensure a suitable strength, the collectors are made preferably with metal sheets thicker than the metal sheets of the plate. Referring to Figs. 2-3, the distance between the two sheets of the C-shaped collector 10 is greater than the distance between the sheets of the plate since the collector grips the plate body externally.

In some embodiments, the necessary flow cross-section requires apertures such that the collector is not strong enough, despite a reasonable increase in thickness of the collector itself. In order to solve this problem, it is possible to provide reinforcements, for example intermediate spacing strips or spacing discs or reinforcing welding spots.

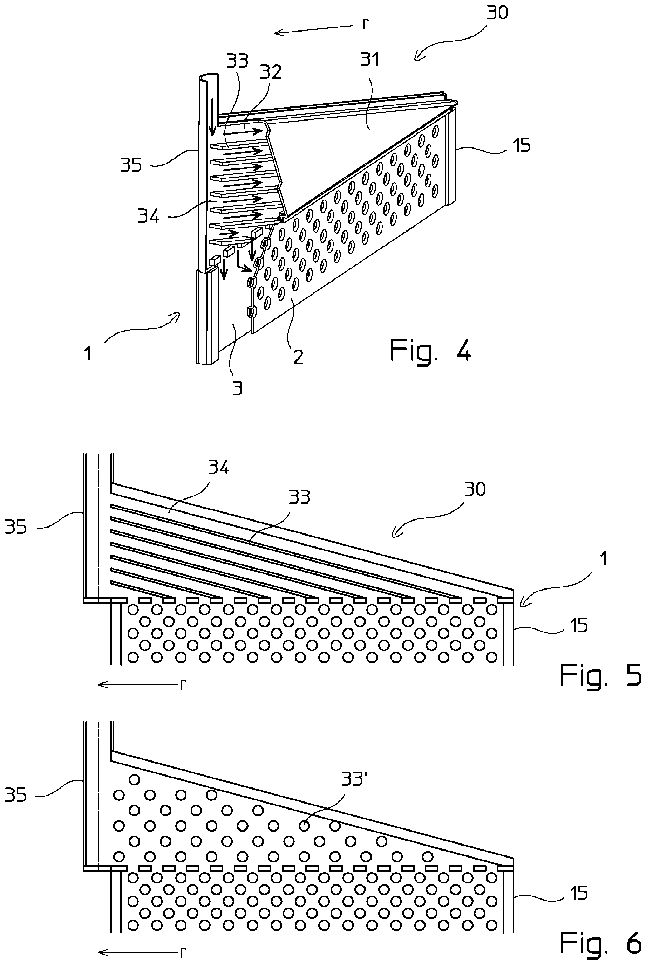

Figs. 4-6 show an embodiment of a collector 30 having, in a front view, a triangular shape. The triangular collector 30 has a maximum height close to a feeding or receiving pipe 35. Accordingly, the cross-section available to the flow inside the collector 30 decreases in a direction away from said pipe 35.

More in detail, the Figs. 4 and 5 show a collector 30 which has a sandwich structure, essentially formed by two walls 31, 32. Preferably, said two walls 31 and 32 are parallel to the walls 2, 3 of the plate 1. In some embodiments one of the walls 31, 32 may be formed by a portion of one of the walls 2, 3 of the plate.

Advantageously, the collector 30 also comprises a series of intermediate spacers (for example spacing strips) 33 to define channels 34 for the fluid and space the walls 31, 32. Preferably said spacers 33 have a full cross-section, for example square or rectangular so as to provide a suitable pressure resistance.

The arrows in Fig. 4 show the flow path of the fluid passing for example form the feed pipe 35 into the channels 34 and then flowing in the inside of the plate 1, between the walls 2 and 3.

Said sandwich design is particularly advantageous with radial plates. Figs. 4-6 also illustrate the radial direction r, oriented from the axis towards the outside of the heat exchanger. Said radial direction *r* is also shown in Fig. 1.

The collector 30 has a trapezoidal or triangular shape, with a height decreasing in the radial direction away from the feeding pipe (generally situated on the outer periphery) and therefore towards the axis of the reactor. The pipe 35 is located in the zone of maximum height opposite to the axis. In this way the zone close to the axis is a zone of minimum height and the flow cross-section decreases away from said pipe 35, towards the axis where the plates converge, adapting to the flowrate which is the greatest close to the pipe 35 and diminishes at the inner end 15 (Fig. 5) of the plate.

Fig. 6 shows an embodiment wherein the plate is reinforced by tabs 33' which perform a function similar to strips 33.

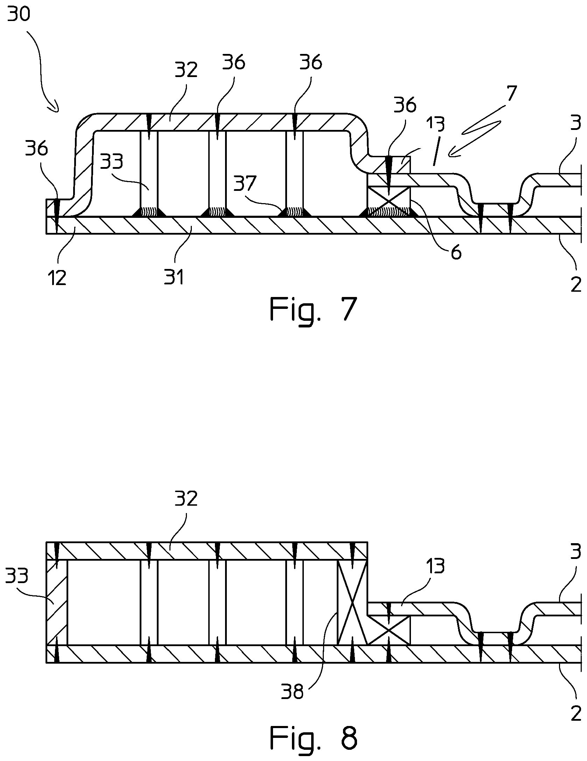

Figs. 7 and 8 show two further embodiments of a heat exchange plate with a sandwich collector according to the invention.

In Fig. 7 a wall 31 of the collector 30 coincides with the wall 2 of the plate 1, which extends beyond the plate edge zone 7 forming a base of the sandwich collector 30. A cover 32 is applied onto the end portions 12, 13 of the walls 2 and 3, to form the opposite wall of the collector 30.

The collector 30 is closed by a series of welds 36 which join the cover 32 to the aforementioned end portions of the walls 2 and 3 and to the tops of the spacers 33 (if provided) creating intermediate fixing points.

It should be noted that said welds 36 can be performed from the same side (for example from the top). Working from one side only is an advantage for the manufacturing process because it avoids turn over and reposition of the workpiece on the automatic welding machine, reducing the production costs.

The welds 37 at the base of the spacers 33 and the spacer 6 may be performed manually or automatically through the outer surface (in the figure the bottom surface) of the sheet 31. The invention is however advantageous since it allows the welds 36 - which are the most costly and main responsible for the leak-tightness of the collector/plate assembly - to be performed automatically and on the same side.

Preferably, the wall 2 of the plate, which is common to the collector, has a greater thickness than that of the wall 3.

The variant according to Fig. 8 (similar to Fig. 7) provides welds on both sides, it has however the advantage to perform automatically all welds, including the welds which fix the spacers 33.

Fig. 8 relates to a preferred embodiment wherein the collector also comprises an L-shaped spacer 38 which compensates for the different height between the cover 32 of the collector and the top wall 3 of the plate 1 and allows simplification of the form of the cover 32, which may be made for example using a flat metal sheet. Also the welds of the spacing strips 33 (or the tabs 33') can be performed automatically.

From Figs. 7 and 8 it can also be understood how the sandwich collector structure is suitable to resist to high pressures, owing to the spacers 33 (or tabs 33') which reinforce the structure and reduce the apertures between adjacent support points of the sheets.

## Claims

1. Plate heat exchanger for internals of isothermal chemical reactors, said plate heat exchanger comprising a plurality of heat exchange elements in the form of plates (1), each plate having an essentially rectangular shape, wherein each plate comprises two walls (2, 3) which are joined together along the perimeter of at least one of said walls and spaced apart, so as to form an internal passage (5) for a heat exchange medium, and wherein each plate comprises a respective first collector for feeding said medium to said passage and a respective second collector for receiving said medium from said passage, said first collector and said second collector being fixed to opposite sides of said plate,
**characterized in that:**
at least one (10, 30) of said first collector and second collector of each plate extends along said side(s) of said plate and comprises edge surfaces which are planar and parallel to respective planar end portions (12, 13) of said walls of said plate, in such a way that said edge surfaces of said at least one collector and said end portions of said walls of said plate form parallel and plane matching surfaces, which are welded together.

2. Heat exchanger according to claim 1, wherein said at least one collector (10) is in the form of a clamp.

3. Heat exchanger according to claim 2, wherein said collector (10) is C-shaped comprising two flanges (11) which parallel overlap with said end portions (12, 13) of the plate.

4. Heat exchanger according to any one of claims 1 to 3, said at least one collector (30) being connected to a feeding or receiving pipe (35) and having a cross-section which decreases in a direction away from said pipe (35).

5. Heat exchanger according to claim 4, wherein said at least one collector (30) has a trapezoidal or triangular shape with a zone of maximum height in the proximity of said pipe, and the height decreases in a direction away from said pipe.

6. Heat exchanger according to claim 1, wherein said at least one collector (30) has a sandwich-like structure, comprising two walls (31, 32) which are sandwiched together, said walls (31, 32) having welding end portions parallel to the end portions (12, 13) of the plate.

7. Heat exchanger according to claim 6, wherein a first wall (31) of said two walls (31, 32) of said at least one collector (30) is formed by a portion of a wall (2) of the plate (1) which extends beyond a peripheral edge (7) of said plate.

8. Heat exchanger according to claim 7, comprising a cover which is applied onto said plate and forms the remaining second wall (32) of said sandwich collector.

9. Heat exchanger according to claim 8, comprising welds (36) which close said cover of the sandwich collector and which are performed on a same side of the assembly formed by plate and collector.

10. Heat exchanger according to any one of claims 6 to 9, wherein said collector (30) comprises a plurality of reinforcing and spacing inserts (33, 33') between the respective two walls.

11. Heat exchanger according to any of the previous claims, **characterized in that** the plates (1) have a pressed plate body or a sandwich plate body.

## Patentansprüche

1. Plattenwärmetauscher für Einbauten von isothermen chemischen Reaktoren, wobei der Plattenwärmetauscher eine Vielzahl von Wärmetauscherelementen in Form von Platten (1) umfasst, wobei jede Platte eine im Wesentlichen rechteckige Form aufweist, wobei jede Platte zwei Wände (2, 3) aufweist, die entlang des Umfangs mindestens einer der Wände miteinander verbunden sind und einen Abstand voneinander haben, um einen inneren Durchgang (5) für ein Wärmeaustauschmedium zu bilden, und wobei jede Platte einen jeweiligen ersten Kollektor zum Zuführen des Mediums zu dem Durchgang und einen jeweiligen zweiten Kollektor zum Aufnehmen des Mediums aus dem Durchgang aufweist, wobei der erste Kollektor und der zweite Kollektor an gegenüberliegenden Seiten der Platte befestigt sind,
**dadurch gekennzeichnet, dass**:
mindestens einer (10, 30) des ersten Kollektors und des zweiten Kollektors jeder Platte sich entlang der Seite(n) der Platte erstreckt und Kantenflächen aufweist, die eben und parallel zu den jeweiligen ebenen Endabschnitten (12, 13) der Wände der Platte sind, so dass die Kantenflächen des mindestens einen Kollektors und die Endabschnitte der Wände der Platte parallele und eben zusammenpassende Flächen bilden, die miteinander verschweißt sind.

2. Wärmetauscher nach Anspruch 1, wobei der mindestens eine Kollektor (10) die Form einer Klammer hat.

3. Wärmetauscher nach Anspruch 2, bei dem der Kollektor (10) C-förmig ist und zwei Flansche (11) aufweist, die sich parallel mit den Endabschnitten (12, 13) der Platte überlappen.

4. Wärmetauscher nach einem der Ansprüche 1 bis 3, wobei der mindestens eine Kollektor (30) mit einem Zulauf- oder Ablaufrohr (35) verbunden ist und einen Querschnitt aufweist, der sich in einer Richtung weg von dem Rohr (35) verringert.

5. Wärmetauscher nach Anspruch 4, wobei der mindestens eine Kollektor (30) eine trapezförmige oder dreieckige Form mit einer Zone maximaler Höhe in der Nähe des Rohrs aufweist und die Höhe in einer Richtung weg von dem Rohr abnimmt.

6. Wärmetauscher nach Anspruch 1, wobei der mindestens eine Kollektor (30) eine sandwichartige Struktur aufweist, die zwei Wände (31, 32) umfasst, die sandwichartig zusammengefügt sind, wobei die Wände (31, 32) Schweißendabschnitte parallel zu den Endabschnitten (12, 13) der Platte aufweisen.

7. Wärmetauscher nach Anspruch 6, wobei eine erste Wand (31) der beiden Wände (31, 32) des mindestens einen Kollektors (30) durch einen Abschnitt einer Wand (2) der Platte (1) gebildet wird, die sich über einen Umfangsrand (7) der Platte hinaus erstreckt.

8. Wärmetauscher nach Anspruch 7, mit einer Abdeckung, die auf der Platte angebracht ist und die verbleibende zweite Wand (32) des Sandwich-Kollektors bildet.

9. Wärmetauscher nach Anspruch 8, mit Schweißnähten (36), die die Abdeckung des Sandwich-Kollektors verschließen und die auf derselben Seite der aus Platte und Kollektor gebildeten Einheit angebracht sind.

10. Wärmetauscher nach einem der Ansprüche 6 bis 9, wobei der Kollektor (30) eine Vielzahl von Verstärkungs- und Abstandseinsätzen (33, 33') zwischen den jeweiligen zwei Wänden aufweist.

11. Wärmetauscher nach einem der vorhergehenden Ansprüche, **dadurch gekennzeichnet, dass** die Platten (1) einen gepressten Plattenkörper oder einen Sandwichplattenkörper aufweisen.

## Revendications

1. Échangeur de chaleur à plaques pour intérieurs de réacteurs chimiques isothermes, ledit échangeur de chaleur à plaques comprenant une pluralité d'éléments d'échange de chaleur se présentant sous la forme de plaques (1), chaque plaque ayant une forme essentiellement rectangulaire, dans lequel chaque plaque comprend deux parois (2, 3) qui sont assemblées le long du périmètre d'au moins l'une desdites parois et espacées, afin de former un passage interne (5) pour un milieu d'échange de chaleur, et dans lequel chaque plaque comprend un premier collecteur respectif pour alimenter en ledit milieu ledit passage et un second collecteur respectif pour recevoir ledit milieu dudit passage, ledit premier collecteur et ledit second collecteur étant fixés sur les côtés opposés de ladite plaque,
**caractérisé en ce que** :
au moins l'un (10, 30) parmi lesdits premier collecteur et second collecteur de chaque plaque s'étend le long dudit côté (desdits côtés) de ladite plaque et comprend des surfaces de bord qui sont planaires et parallèles aux parties d'extrémité planaires (12, 13) respectives desdites parois de ladite plaque, de sorte que lesdites surfaces de bord dudit au moins un collecteur et lesdites parties d'extrémité desdites parois de ladite plaque forment des surfaces correspondantes parallèles et planes, qui sont soudées ensemble.

2. Échangeur de chaleur selon la revendication 1, dans lequel ledit au moins un collecteur (10) se présente sous la forme d'une pince.

3. Échangeur de chaleur selon la revendication 2, dans lequel ledit collecteur (10) est en forme de C comprenant deux brides (11) qui chevauchent parallèlement lesdites parties d'extrémité (12, 13) de la plaque.

4. Échangeur de chaleur selon l'une quelconque des revendications 1 à 3, ledit au moins un collecteur (30) étant raccordé à un tuyau d'alimentation ou de réception (35) et ayant une section transversale qui diminue dans une direction à distance dudit tuyau (35).

5. Échangeur de chaleur selon la revendication 4, dans lequel ledit au moins un collecteur (30) a une forme trapézoïdale ou triangulaire avec une zone de hauteur maximum à proximité dudit tuyau, et la hauteur diminue dans une direction à distance dudit tuyau.

6. Échangeur de chaleur selon la revendication 1, dans lequel ledit au moins un collecteur (30) a une structure en forme de sandwich, comprenant deux parois (31, 32) qui sont prises en sandwich ensemble, lesdites parois (31, 32) ayant des parties d'extrémité de soudage parallèles aux parties d'extrémité (12, 13) de la plaque.

7. Échangeur de chaleur selon la revendication 6, dans lequel une première paroi (31) desdites deux parois (31, 32) dudit au moins un collecteur (30) est formée par une partie d'une paroi (2) de la plaque (1) qui s'étend au-delà d'un bord périphérique (7) de ladite plaque.

8. Échangeur de chaleur selon la revendication 7, comprenant un couvercle qui est appliqué sur ladite plaque et forme la seconde paroi (32) résiduelle dudit collecteur en sandwich.

9. Échangeur de chaleur selon la revendication 8, comprenant des soudures (36) qui ferment ledit couvercle du collecteur en sandwich et qui sont réalisées sur un même côté de l'ensemble formé par la plaque et le collecteur.

10. Échangeur de chaleur selon l'une quelconque des revendications 6 à 9, dans lequel ledit collecteur (30) comprend une pluralité d'inserts de renforcement et d'espacement (33, 33') entre les deux parois respectives.

11. Échangeur de chaleur selon l'une quelconque des revendications précédentes, **caractérisé en ce que** les plaques (1) ont un corps de plaque comprimé ou un corps de plaque en sandwich.
